# EUROPÄISCHE PATENTSCHRIFT

(11) **EP 0 459 095 B1**
(45) Veröffentlichungstag und Bekanntmachung des Hinweises auf die Patenterteilung: **14.04.1993**
(21) Anmeldenummer: 91103781.0
(22) Anmeldetag: 13.03.1991
(51) Int. Cl.: B60G 17/033, B60G 17/052

(54) **Omnibus, insbesondere Niederflurbus**
Omnibus especially with low platform
Autobus, en particulier à plate-forme surbaissée

(30) Priorität: 27.04.1990 DE 4013670
(43) Veröffentlichungstag der Anmeldung: 04.12.1991
(73) Patentinhaber: MAN Nutzfahrzeuge Aktiengesellschaft, 80976 München (DE)
(72) Erfinder: Santl, Johann, W-8000 München 60 (DE)

(56) Entgegenhaltungen:
- EP-A- 0 181 794
- PATENT ABSTRACTS OF JAPAN Band 9, Nr. 98, (M-375)(1821), 27. April 1985; & JP - A - 59223508 (HINO JIDOSHA) 15.12.1984

## Beschreibung

Die Erfindung betrifft einen Omnibus, insbesondere Niederflurbus, mit Merkmalen entsprechend dem Oberbegriff des Anspruchs 1.

Ein Omnibus mit einer ein solches,,kneeling" ermöglichenden Einrichtung ist aus JP-A 59 223 508 bekannt. Dabei kommt ein achsweise geschlossenes Druckluftsystem zur Anwendung, mit einem durch eine Membran zweigeteilten Steuerbehälter, an dessen einem Raum eine einstiegsseitige Luftfeder und dessen anderen Raum die achsseitig gegenüberliegende Luftfeder angeschlossen ist. Zur Steuerung des ,,kneeling" ist in den Steuerbehälter eine druckluftbetätigte Zylinder-/Kolben-Einheit eingebaut, deren Kolben an der Membrane angeschlossen ist und so, je nach Betätigungsrichtung derselben, Luft zur einen Luftfeder hinpumpt, gleichzeitig entsprechend viel Lüftablaß aus der anderen Luftfeder zuläßt. Diese Lösung hat jedoch abgesehen von den hohen Kosten für den Steuerbehälter den Nachteil, daß seitens der Zylinder-/Kolben-Einheit ein relativ hohes Stützmoment aufgebracht werden muß, um während der Fahrt Nickbewegungen des Wagenaufbaus in dessen Längsachse infolge der an den Steuerbehälter angeschlossenen Luftfedern zu vermeiden. Dies kann entweder durch entsprechend starke Bemessung der in der Zylinder-/Kolben-Einheit gegebenen Rückstelldruckfeder oder durch ein entsprechend hohes, im Druckraum der Zylinder-/Kolben-Einheit verbleibendes Druckhalteniveau erzeugt werden, setzt dann aber relativ hohe Steuerdrucke voraus.

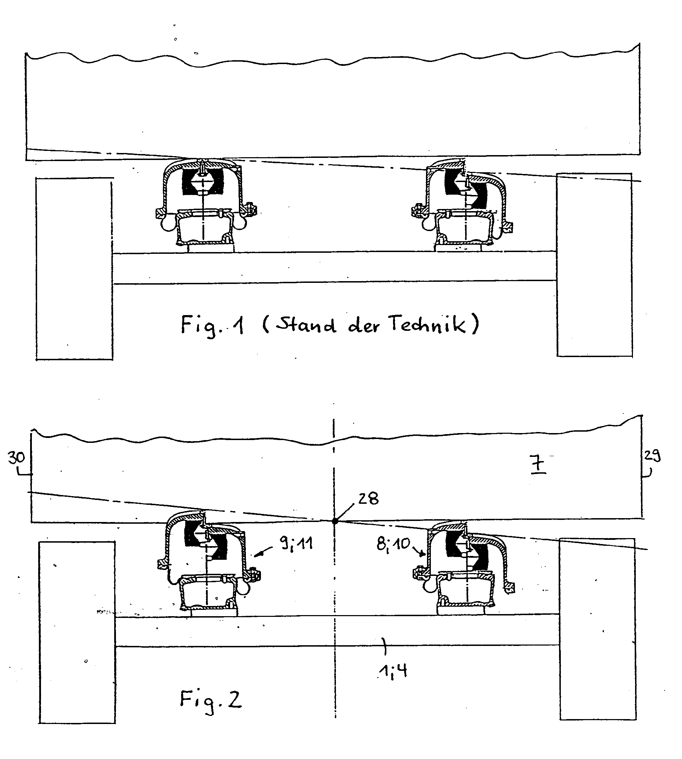

Demgegenüber wird bei anderen bekannten, gebauten Niederflurbussen der Anmelderin und anderer Bushersteller ein anderes Druckluftsystem verwendet, um den Wagenaufbau während einer Bus-Haltephase auf seiner die Fahrgasteinstiegtüren aufweisenden Seite abzusenken. Dabei wird Luft aus den diesseitigen Luftfedern in die Atmosphäre abgelassen, der Wagenaufbau bleibt auf der gegenüberliegenden Seite auf den dortigen Luftfedern abgestützt. Dieser Vorgang ist in Fig. 1 der Zeichnung als Stand der Technik dargestellt.

Diese bekannte Absenkmöglichkeit erweist sich für den angestrebten Zweck als durchaus brauchbar. Nachteilig ist jedoch die vergleichsweise lange Dauer des Absenkvorganges, weil die Druckluft aus den Luftfedern nur über geringe Leitungsquerschnitte, die von Niveauregelventilen oder Magnetventilen freigegeben werden, abgelassen werden kann. Bei Linienbussen mit knapp bemessenen fahrplanmäßigen Haltezeiten kann dies zu unerwünschten Verspätungen führen.

Es ist daher Aufgabe der Erfindung, bei einem Omnibus Mittel vorzusehen, mit denen das besagte Absenken des Wagenaufbaues beschleunigbar ist.

Diese Aufgabe ist erfindungsgemäß durch einen Omnibus mit den im Anspruch 1 angegebenen Merkmalen gelöst.

Dadurch, daß zum Verschwenken des Wagenaufbaus während des Ablassens der Luft aus den einstiegsseitigen Luftfedern die gegenüberliegenden Luftfedern mit Druckluft beaufschlagt werden, wird ein Drehmoment um die bodenseitige Längsmittelachse des Wagenaufbaus erzeugt, was einen erhöhten Druck auf die zu entlüftenden Luftfedern bewirkt und damit den Entlüftungsvorgang beschleunigt. Das zusätzliche Befüllen der gegenüberliegenden Luftfedern erfordert zwar einen gewissen Energiemehraufwand, der aber durch den Vorteil weitgehend sicher einhaltbarer Fahrpläne in Kauf zu nehmen ist.

Nachstehend ist die Erfindung anhand der Zeichnung noch näher erläutert. In der Zeichnung zeigen:
- Fig. 1: schematisiert die bisherige Lösung (Stand der Technik),
- Fig. 2: schematisiert das allgemeine Erfindungsprinzip,

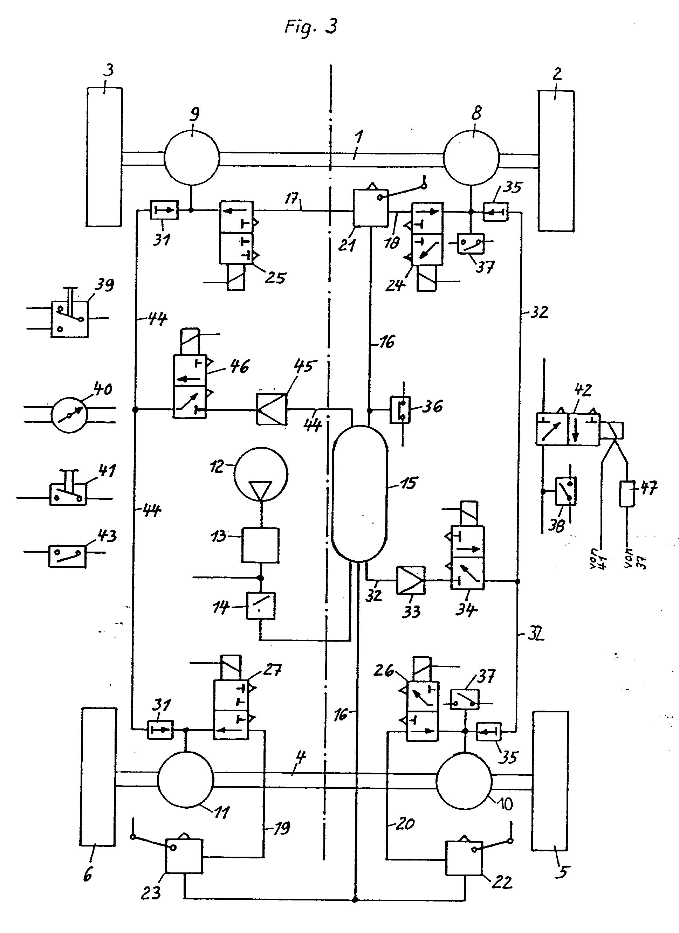

- Fig. 3: eine Ausführungsform der Erfindung schematisiert.

Vom Omnibus, insbesondere Niederflurbus, sind in der Zeichnung - soweit für das Verständnis der Erfindung notwendig - die Vorderachse 1 mit Rädern 2, 3, die Hinterachse 4 mit Rädern 5, 6, der Wagenaufbau 7, welcher über Luftfedern 8, 9, 10, 11 auf den Achsen 1, 4 bzw. den Radaufhängungen abgestützt ist, und das zur Versorgung der Luftfedern mit Druckluft erforderliche System in Verbindung mit der erfindungsgemäßen Einrichtung dargestellt.

Die im Omnibus erforderliche Druckluft wird von einem Kompressor 12 erzeugt und über ein Druckregelventil 13 einem Druckluftvorratsbehälter 15 zugeführt. Letzterer ist über ein Überströmventil 14 gegenüber anderen Vorratsbehältern und Verbrauchern wie Bremsen, Türschließanlage und dergleichen mehr (nicht dargestellt) abgesichert und weist einen demgegenüber höheren Druck auf. Aus dem Druckluftvorratsbehälter 15 werden die Luftfedern 8, 9, 10, 11 über Versorgungsleitungen 16, 17, 18, 19, 20 mit darin angeordneten Niveauregelventilen 21, 22, 23 und für den Senk- bzw. Hebevorgang notwendigen Magnetventilen 24, 25, 26, 27 mit Druckluft versorgt. Letztere sind beispielsweise von einer Steuereinrichtung (Schalter) 39 her zu betätigen.

Bei in normaler Fahrstellung befindlichem Wagenaufbau 7 sind die Luftfedern 8, 9, 10, 11 über die Niveauregelventile 21, 22, 23 und die stromlos auf Durchlaß geschalteten Magnetventile 24, 25, 26, 27 entsprechend versorgt, wobei die besagten Niveauregelventile eine gleichbleibende Niveaulage des Wagenaufbaus 7 regeln.

Für einen Absenkvorgang werden die Magentventile 24, 25, 26, 27 sowie zwei weitere Magnetventile 34, 46 durch einen Befehl der Steuereinrichtung 39 in eine solche Schaltposition gebracht, daß der wagenaufbau 7 - wie in Fig. 2 dargestellt
a) während einer Bus-Haltephase an einer Haltestelle etwa um seine bodenseitige Längsmittelachse 28 dem Waagebalken-Prinzip entsprechend verschwenkbar ist, das heißt, an der die Fahrgasteinstiegtüren aufweisenden Seite 29 auf eine gegenüber Normalhöhenniveau niedrigere Einstiegshöhe absenkbar und gleichzeitig auf der gegenüberliegenden Seite 30 anhebbar ist, durch Entlüftung der einstiegsseitigen Luftfedern 8, 10 und gleichzeitige Druckluftbeaufschlagung der achsseitig jeweils gegenüberliegenden Luftfedern 9, 11 über eine Versorgungsleitung 44 mit darin angeordnetem Druckregelventil 45, Magnetventil 46 und Rückschlagventilen 31, und dann
b) nach Beendigung der Einstiegsphase durch Druckbeaufschlagung der Luftfedern 8, 10 über eine Versorgungsleitung 32 mit darin angeordnetem Druckregelventil 33, Magnetventil 34 und Rückschlagventilen 35 sowie durch gleichzeitige Teilentlüftung der Luftfedern 9, 11 über die Niveauregelventile 21, 23 in die Atmosphäre wieder in seine Normallage (Fahrniveau) rückverschwenkbar ist.

Das Verschwenken des Wagenaufbaus 7 gemäß a) ist erst möglich, wenn der Steuereinrichtung 39 von einem Druckschalter 38 das Betätigen der Haltestellenbremse durch Organe 41, 42 sowie von und über einen Grenzwertgeber 40 das Unterschreiten einer Minimalgeschwindigkeit von beispielsweise 3 km/h signalisiert wird.

Ein Anfahren des Fahrzeuges nach einer Haltephase ist nach Beendigung des Rückschwenkvorganges des Wagenaufbaus 7 gemäß b) erst dann möglich, wenn der Steuereinrichtung 39 vom Druckschalter 38 das Lösen der Haltestellenbremse durch Organe 41, 42 und von einem Schalter 43 das Schließen der Fahrgasteinstiegtüren signalisiert ist. Damit das Fahrzeug nicht mit drucklosen Luftfedern 8, 10 anfahren kann, entlüftet bzw. löst das Magnetventil 42 der Haltestellenbremse erst dann, wenn in den Luftfedern 8, 10 wenigstens etwa 1/3 des nötigen Fahrniveaudruckes der am stärksten belasteten Luftfeder gegeben und dies dem Magnetventil 42 über Druckschalter 37 sowie ein Verzögerungsrelais 47 signalisiert ist.

Über einen Druckschalter 36 kann am Instrumentenbrett des Fahrzeugs eine Warnleuchte aktiviert werden, was dem Fahrer einen zum Anheben des Wagenaufbaus 7 auf Fahrniveau nicht mehr ausreichenden Luftdruck im Druckluftvorratsbehälter 15 anzeigt. Über diesen Schalter 36 kann außerdem die Stromzufuhr für die Steuereinrichtung 39 unterbrochen werden, was verhindert, daß bei ungenügendem Druckluftvorrat ein Wagenaufbau-Verschwenkvorgang ausgelöst werden könnte.

## Patentansprüche

1. Omnibus, insbesondere Niederflurbus, mit über Luftfedern (8, 9, 10, 11) auf den Achsen (1, 4) bzw. Radaufhängungen abgestütztem Wagenaufbau (7) und mit einer hinsichtlich ihrer Teile und Funktion derart ausgebildeten, in den Leitungswegen (17, 18, 19, 20) zwischen Niveauregelventilen (21, 22, 23) und Luftfedern (8, 9, 10, 11) gegebene Magnetventile (24, 25, 26, 27) umfassenden Einrichtung, daß der Wagenaufbau (7)
a) während einer Bus-Haltephase etwa um seine bodenseitige Längsmittelachse (28) schwenkbar, das heißt, auf der die Fahrgasteinstiegtüren (29) aufweisenden Seite auf eine gegenüber Normalniveau niedrigere Einstieghöhe absenkbar, auf der gegenüberliegenden Seite (30) gleichzeitig anhebbar ist durch entsprechende Teilentladung der einstiegsseitigen Luftfedern (8, 10) und Druckluftbeaufschlagung der achsseitig gegenüberliegenden Luftfedern (9, 11), und
b) nach Beendigung der Einstiegsphase durch Druckluftbeaufschlagung der einstiegsseitigen Luftfedern (8, 10) und gleichzeitige Teilentladung der gegenüberliegenden Luftfedern (9, 11) wieder in Normallage zurückverschwenkbar ist,
dadurch gekennzeichnet, daß die Druckluftbeaufschlagung der der Einstiegseite gegenüberliegenden Luftfedern (9, 11) in der Phase gemäß a) über eine vom Druckluftvorratsbehälter (15) abgehende erste Versorgungsleitung (44) mit Druckregelventil (45), auf Durchlaß geschaltetem Magnetventil (46) und Rückschlagventilen (31) erfolgt, während die Druckluftbeaufschlagung der einstiegsseitigen Luftfedern (8, 10) in der Phase gemäß b) über eine vom Druckluftvorratsbehälter (15) abgehende zweite Versorgungsleitung (32) mit Druckregelventil (33), auf Durchlaß geschaltetem Magnetventil (34) und Rückschlagventilen (35) erfolgt und dabei gleichzeitig die gegenüberliegenden Luftfedern (9, 11 ) über angeschlossene Niveauregelventile (21, 23) in die Atmosphäre teilentlüftet werden.

2. Omnibus nach Anspruch 1, dadurch gekennzeichnet, daß das Verschwenken des Wagenaufbaus (7) gemäß a) erst möglich ist, wenn einer Steuereinrichtung (39) von einem Druckschalter (38) das Betätigen der Haltestellenbremse durch Organe (41, 42) sowie von und über einen Grenzwertgeber (40) das Unterschreiten einer Minimalgeschwindigkeit von beispielsweise 3 km/h signalisiert wird.

3. Omnibus nach Anspruch 1, dadurch gekennzeichnet, daß ein Anfahren desselben nach einer Haltephase erst nach Beendigung des Rückschwenkvorganges des Wagenaufbaus (7) und außerdem erst dann möglich ist, wenn einer Steuereinrichtung (39) von einem Druckschalter (38) das Lösen der Haltestellenbremse durch Organe (41, 42) und von einem Schalter (43) das Schließen der Fahrgasteinstiegtüren signalisiert ist.

4. Omnibus nach Anspruch 1, dadurch gekennzeichnet, daß zur Verhinderung von dessen Anfahren mit nach einem einstiegtürenseitigen Absenkvorgang drucklosen einstiegsseitigen Luftfedern (8, 10) ein Magnetventil (42) der Haltestellenbremse erst dann entlüftet wird bzw. löst, wenn in den einstiegsseitigen Luftfedern (8, 10) wenigstens etwa 1/3 des nötigen Fahrniveaudruckes der am stärksten belasteten Luftfeder gegeben und dies dem Magnetventil (42) über Druckschalter (37) sowie ein Verzögerungsrelais (47) signalisiert ist, wobei das Verzögerungsrelais (47) dazu dient, ein ungewolltes Aktivieren der Haltestellenbremse durch während der Fahrt infolge Einfederung des Wagenaufbaus (7) in den Luftfedern hervorgerufene Druckschwankungen zu verhindern.

5. Omnibus nach Anspruch 1, dadurch gekennzeichnet, daß über einen Druckschalter (36) bei einem zum Anheben des Wagenaufbaus (7) auf Fahrniveau nicht mehr ausreichenden Druck im Druckluftvorratsbehälter (15) zur Anzeige dieses Zustandes eine Warnleuchte am Instrumentenbrett des Fahrzeugs aktivierbar ist und über diesen Schalter (36) gegebenenfalls auch die Stromzufuhr für eine Steuereinrichtung (39) unterbrechbar ist, mit der die Vorgänge für einen Wagenaufbau-Verschwenkvorgang steuerbar sind.

## Claims

1. Bus, especially dropped-frame bus, with body (7) supported on the axles (1, 4) and wheel suspensions via air bellows (8, 9, 10, 11) and equipped with a device comprising given solenoid valves (24, 25, 26, 27) located in the line channels (17, 18, 19, 20) between level control valves (21, 22, 23) and air bellows (8, 9, 10, 11) and which with regard to its parts and function is designed in such a way that the body (7)
**a)** can be slewed approximately about its floor-related longitudinal axis (28) during stops at bus stops, ie it can be lowered to a lower entrance height in than the normal level on the side on which the entrance doors (29) for passengers are located and be simultaneously raised on the opposite side (30) by an appropriate partial deflation of the air bellows (8, 10) on the side with the entrance doors and an inflation of the bellows (9, 11) located on the other side of the axles, and which,
**b)** after completion of the entering phase, can be slewed back to normal level by an inflation of the air bellows (8, 10) on the side with the entrance doors and a simultaneous partial deflation of the opposite air bellows (9, 11),
characterised by the fact that the air bellows (9, 11) opposite the entrance side are inflated in the phase as per a) via a first feeder (44) going out from the compressed air reservoir (15), which feeder is equipped with a pressure control valve (45), a solenoid valve (46) switched to flow and check valves (31), while the air bellows (8, 10) on the entrance side are inflated in the phase as per b) via a second feeder (32) going out from the compressed-air reservoir (15), which feeder is equipped with a pressure control valve (33), a solenoid valve (34) switched to flow and check valves (35), the opposite air bellows (9, 11) being partially deflated into the atmosphere at the same time via connected level control valves (21, 23).

2. Bus as under Claim 1, characterised by the fact that the slewing of the body (7) as per a) is possible only when the actuation of the bus stop brake effected by organs (41, 42) is signalled to a control unit (39) by a pressure switch (38) and when it is signalled to said control unit (39) by and via a limit value transmitter (40) that the speed has fallen below a minimum speed of eg 3 km/h.

3. Bus as under Claim 1, characterised by the fact that after a stop phase the bus can move off only when the body (7) has slewed back and only when a pressure switch (38) signals to a control unit (39) that the parking brake has been released by organs (41, 42) and when a switch (43) signals to said control unit (39) that the passenger entrance doors have been closed.

4. Bus as under Claim 1, characterised by the fact that, in order to prevent the bus from moving off with pressureless air bellows (8, 10) on the entrance side after a lowering operation on the entrance side, a solenoid valve (42) of the parking brake will bleed and release only when at least approx. 1/3 of the required driving level pressure of the air bellows subject to the highest load is available in the air bellows (8, 10) on the entrance side, and when this is signalled to the solenoid valve (42) via pressure switch (37) and a time-lag relay (47), whose task is to prevent unintended activation of the bus-stop brake as a result of pressure variations in the air bellows caused by body (7) -related spring compression when the bus is in motion.

5. Bus as under Claim 1, characterised by the fact that, if the pressure in the compressed-air reservoir (15) is no longer sufficient to raise the body (7) to driving level, a warning lamp indicating this condition in the instrument panel of the vehicle can be activated via a pressure switch (36) which can, if necessary, also interrupt the current supply for the control unit (39) that controls the body slewing operations.

## Revendications

1. Autobus, notamment autobus à plancher surbaissé, comportant une carrosserie (7) qui s'appuie par l'intermédiaire de coussins d'air (8, 9, 10, 11) sur les essieux (1, 4) ou par des suspensions de roues, et qui est réalisé quant à ses pièces et fonctions pour que, dans les chemins des conduites (17, 18, 19, 20), entre les soupapes de régulation de niveau (21, 22, 23) et les ressorts pneumatiques (8, 9, 10, 11), se trouve un dispositif comprenant des électrovannes (24, 25, 26, 27),
a) pendant une phase d'arrêt de l'autobus, du côté qui peut sensiblement pivoter autour de l'axe longitudinal médian (28) situé au niveau du sol, c'est-à-dire que le côté comportant les portières d'entrée des passagers (29) puisse être abaissé d'une hauteur de montée plus faible que le niveau normal mais que du côté opposé (30) il y ait en même temps relèvement par une décharge partielle correspondante des organes de signalisation pneumatiques situés du côté de l'entrée par l'alimentation en air comprimé des ressorts à air (9, 11) opposés par rapport à l'axe,
b) à la fin de la phase de montée, par l'alimentation en air comprimé des ressorts pneumatiques (8, 9) situés du côté de l'entrée et en même temps la décharge partielle des ressorts pneumatiques opposés (9, 11) on rebascule en position normale,
caractérisé en ce que l'alimentation en air comprimé des ressorts pneumatiques (9, 11) situés du côté de l'entrée, dans la phase selon a), se fait par l'intermédiaire d'une première conduite d'alimentation (44) partant du réservoir d'air comprimé (15), cette conduite étant équipée d'une soupape de régulation de pression (45), d'une électrovanne (46) en position de passage et de clapet anti-retour (31) alors que l'alimentation en air comprimé des ressorts (8, 9) du côté de l'entrée, au cours de la phase selon b), se fait par une seconde conduite d'alimentation (32) partant du réservoir d'air comprimé (15), équipée d'une soupape de régulation de pression (33), d'électrovannes (34) à l'état passant et de clapets anti-retour (35) et en même temps les ressorts à air (9, 11) opposés sont partiellement vidés à l'atmosphère par des soupapes de régulation de niveau (21, 23) raccordées.

2. Autobus selon la revendication 1, caractérisé en ce que le basculement de la carrosserie (7) selon a) est seulement possible lorsqu'un dispositif de commande (39) signale qu'un commutateur de pression (38) a actionné le frein d'arrêt à une halte signal par des organes (41, 42) ainsi que par un générateur de valeur limite (40), le dépassement vers le bas d'une vitesse minimale par exemple de 3 km/h.

3. Autobus selon la revendication 1, caractérisé en ce que le démarrage de l'autobus après une phase d'arrêt n'est possible qu'après la fin de l'opération de basculement en retour de la carrosserie (7) et en outre seulement si une installation de commande (39) a signalé à partir d'un commutateur de pression (38), l'ouverture du frein d'arrêt de secours par des organes (41, 42) et par un commutateur (43), la fermeture des portes d'entrée des passagers.

4. Autobus selon la revendication 1, caractérisé en ce que pour éviter son démarrage après une opération d'abaissement du côté des portes d'entrée, les ressorts pneumatiques (8, 9) situés du côté de la montée, sans pression, on évacue ou on libère une électrovanne (42) du frein de halte que si dans les ressorts pneumatiques (8, 9) situés du côté de la montée, au moins environ 1/3 du niveau de pression nécessaire au déplacement pour le ressort pneumatique le plus fortement sollicité est assuré et cela est signalé à l'électrovanne (42) par l'intermédiaire d'un commutateur de pression (37) ainsi que par un relais de temporisation (47), le relais de temporisation (47) servant à éviter toute mise en oeuvre intentionnelle du frein de halte par le mouvement de suspension de la carrosserie du véhicule (7) en cours de déplacement, pour les variations de pression provoquées par les ressorts pneumatiques.

5. Autobus selon la revendication 1, caractérisé en ce que, si un commutateur de pression (36), lors du soulèvement de la carrosserie (7) du véhicule au niveau de la position de déplacement, indique qu'il n'y a plus suffisamment de pression dans le réservoir d'air comprimé (15), cet état est indiqué par un voyant lumineux sur le tableau de bord du véhicule et ce commutateur (36) coupe également l'alimentation électrique de l'installation de commande (39) qui permet de commander les opérations de basculement de la carrosserie.
